# EUROPÄISCHE PATENTANMELDUNG

(11) **EP 1 450 459 A1**
(43) Veröffentlichungstag der Anmeldung: **25.08.2004**
(21) Anmeldenummer: 03405107.8
(22) Anmeldetag: 20.02.2003
(51) Int. Cl.: H02H 3/05

(54) **Fehlertolerante Sammelschienenstation mit Schutzschaltern und Verfahren zur Steuerung einer solchen**

(71) Anmelder: ABB RESEARCH LTD., 8050 Zürich (CH)
(72) Erfinder: Stanimirov, Michael, 4632 Trimbach (CH); Brand, Klaus-Peter, 5430 Wettingen (CH); Deck, Bernhard, 79809 Weilheim (DE); Zurfluh, Franz, 5200 Brugg (CH)
(74) Vertreter: ABB Patent Attorneys

(57) **Zusammenfassung**

Bei einer Sammelschiene (1) mit mehreren Abgängen (2a - 2f) werden die Abgänge (2a - 2f) durch Schutzschaltungen (3a - 3f) geschützt. Jede Schutzschaltung weist einen Schutzschalter und eine Steuerung auf. Damit jeder Schutzschalter auch noch bei Ausfall seiner Steuerung betätigt werden kann, sind Verbindungen (16) zwischen benachbarten Schutzschaltungen (3a - 3f) vorgesehen. Ein Ausschaltsignal kann über diese Verbindungen (16) auch unter Umgehung der lokalen Steuerung an den jeweiligen Schutzschalter geschickt werden. Dadurch wird, weitgehend ohne Redundanz, die Zuverlässigkeit der Anlage erhöht.

## Beschreibung

### Technisches Gebiet

Die Erfindung betrifft eine fehlertolerante Sammelschienenstation mit Schutzschaltern und ein Verfahren zur Steuerung einer solchen Sammelschienenstation gemäss Oberbegriff der unabhängigen Ansprüche.

### Stand der Technik

Für den Schutz von Sammelschienenstationen werden Schutzschaltungen vorgesehen, die je einen der Abgänge schützen. Jede Schutzschaltung umfasst einen Schutzschalter zum Unterbrechen des Abgangs, eine Steuerung zum Steuern des Schutzschalters und Messmittel zum Messen mindestens einer Zustandsgrösse des jeweiligen Abgangs. Ferner sind Überwachungsmittel vorgesehen, ausgestaltet zum Prüfen mindestens eines von den Zustandsgrössen abhängigen Schutzkriteriums. Wird das Schutzkriterium nicht erfüllt, so wird ein Ausschaltsignal für mindestens einen der Schutzschalter erzeugt.

Bei derartigen Systemen ist die Fehlertoleranz wichtig. Sie wird normalerweise durch Redundanz der Komponenten erreicht. Insbesondere sind die Komponenten der Schutzschaltungen doppelt ausgeführt, was jedoch aufwändig und teuer ist.

### Darstellung der Erfindung

Es stellt sich deshalb die Aufgabe, eine Sammelschienenstation und ein Verfahren der eingangs genannten Art bereitzustellen, die bei geringem apparativem Aufwand eine hohe Fehlertoleranz aufweisen.

Diese Aufgabe wird durch die unabhängigen Ansprüche gelöst.

Erfindungsgemäss sind also alternative Signalpfade zum Ausschalten der Schutzschalter vorgesehen. Einerseits kann ein Schutzschalter durch die Steuerung der ihm zugeordneten Schutzschaltung ausgeschaltet werden. Andererseits kann das Ausschaltsignal jedoch auch von der Steuerung einer anderen, z.B. einer benachbarten, Schutzschaltung kommen. Dadurch erübrigt es sich, pro Schutzschaltung zwei redundante Steuerungen vorzusehen, ohne dass es zu wesentlichen Einbussen bei der Fehlertoleranz kommt.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 ein vereinfachtes Blockdiagramm einer Sammelschienenstation,
Fig. 2 den Aufbau einer ersten Ausführung der Schutzschaltung und
Fig. 3 den Aufbau einer zweiten Ausführung der Schutzschaltung.

### Wege zur Ausführung der Erfindung

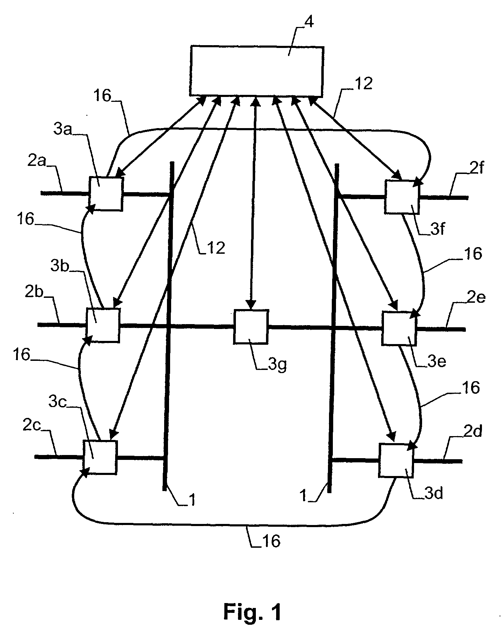

Die Sammelschienenstation gemäss Fig. 1 besitzt eine Sammelschiene 1 mit mehreren Abgängen 2a - 2f für Hochspannungsanschlüsse, wobei jeder Abgang von einer Schutzschaltung 3a - 3f geschützt ist. Zusätzlich kann die Sammelschiene 1 mittels einer weiteren Schutzschaltung 3g in zwei Teile unterteilt sein. Die Schutzschaltungen 3a - 3f sind mit einer Zentralsteuerung 4 verbunden. Zur Kommunikation der Schutzschaltungen 3a - 3f mit der Zentralsteuerung ist ein Bussystem 12 vorgesehen. Ferner sind im folgenden zu beschreibende Verbindungen 16 zwischen den einzelnen Schutzschaltungen vorhanden.

Aufgabe einer derartigen Sammelschienenstation ist der Austausch elektrischer Energie im Hochspannungsbereich zwischen den Abgängen 2a - 2f. Die Schutzschaltungen 3a - 3g dienen zur Detektion von Fehlzuständen, z.B. aufgrund von Kurzschlüssen in der Sammelschiene oder auf den mit den Abgängen 2a - 2f verbundenen Leitungen und, falls ein Fehlerzustand eintritt, zum Unterbrechen der ihnen zugeordneten Teile des Hochspannungsnetzes.

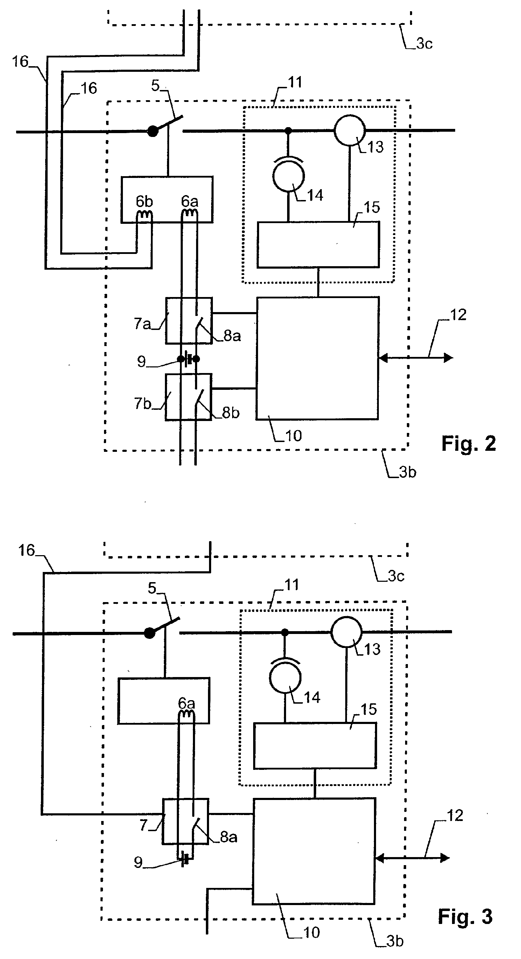

Fig. 2 zeigt einen möglichen Aufbau einer der Schutzschaltungen, wobei die Schutzschaltungen 3a - 3f alle im wesentlichen gleich aufgebaut sind.

Die Schutzschaltung 3b besitzt einen Schutzschalter 5, welcher im zugehörigen Abgang 2b liegt und diesen unterbrechen kann. Der Schutzschalter 5 kann alternativ mittels (mindestens) zweier elektromagnetischer Erreger 6a, 6b betätigt werden. Wird mindestens einer der Erreger 6a, 6b von einem ausreichenden Strom durchflossen, so öffnet sich der Schutzschalter 5. Hochspannungs-Schutzschalter dieser Art sind dem Fachmann bekannt.

Erreger 6a ist mit einer ersten Ansteuerung 7a verbunden. In der Ansteuerung 7a ist ein Schalter 8a angeordnet, bei dessen Betätigung der Erreger 6a mit einer Strom- bzw. Spannungsquelle 9 verbunden und somit der Stromkreis des Erregers 6a geschlossen wird.

Das Eingangssignal für die Ansteuerung 7a wird von einer Steuerung 10 erzeugt. Die Steuerung 10 steht mit Messmitteln 11 in Verbindung, sowie über ein Bussystem 12 mit der Zentralsteuerung 4.

Die Messmittel 11 umfassen z.B. einen Spannungssensor 13, mittels welchem eine Über- oder Unterspannung auf dem zugehörigen Abgang 2b festgestellt wird, einen Hochfrequenz- und/oder Stromsensor 14, sowie ein Interface 15 zum Umwandeln der Signale der Sensoren 13, 14.

Schliesslich besitzt die Schutzschaltung 3b (wie auch alle übrigen Schutzschaltungen 3a - 3f) eine zweite Ansteuerung 7b, die gleich aufgebaut ist wie die erste Ansteuerung 7a, und die mit den dem Erreger 6b einer benachbarten Schutzschaltung 3a verbunden ist. Andererseits ist der Erreger 6b der Schutzschaltung 3b ebenfalls mit der zweiten Ansteuerung 7b einer weiteren benachbarten Schutzschaltung 3c verbunden. Somit kann nicht nur die Steuerung 10 der Schutzschaltung 3b den Schutzschalter 5 der Schutzschaltung 3b unterbrechen, sondern auch die Steuerung 10 der Schutzschaltung 3c, da der Stromkreis des Erregers 6b der Schutzschaltung 3b durch die Ansteuerung 7b der Schutzschaltung 3c geführt ist. Jeder Schutzschalter 5 kann somit von zwei unterschiedlichen Steuerungen aus unterbrochen werden. Jede Steuerung weist eine Verbindung 16 zu je mindestens einem Schutzschalter einer anderen Schutzschaltung auf, über welche bei Defekt der Steuerung der anderen Schutzschaltung ein Ausschaltsignal übertragen werden kann.

Die Funktionsweise der Sammelschienenstation ist wie folgt:

Im Normalbetrieb erfassen die Messmittel 11 je eine oder mehrere Zustandsgrössen eines Abgangs. Dabei kann es sich z.B. um den Strom im jeweiligen Abgang, die Spannung und/oder das Auftreten von hochfrequenten Signalen handeln. Es können auch aus diesen Grössen abgeleitete Zustandsgrössen ermittelt werden, wie z.B. die der momentane Leistungsfluss im Abgang oder Impedanz des Abgangs.

Die Zustandsgrössen werden an die Zentralsteuerung 4 weitergeleitet, welche vorzugsweise aus einer zentral angeordneten Einheit oder aus einer verteilt implementierten Soft- und Hardware besteht. Die Zentralsteuerung bildet ein Überwachungsmittel, welches mindestens ein von den Zustandsgrössen mehrerer Abgänge abhängiges Schutzkriterium überprüft. Ist dieses Schutzkriterium nicht erfüllt, so erzeugt die Zentralsteuerung 4 ein Ausschaltsignal für mindestens einen der Schutzschalter 5.

Dem Fachmann sind verschiedene geeignete nicht-lokale Schutzkriterien dieser Art, d.h. Schutzkriterien, die von den Zustandsgrössen mehrerer Abgänge abhängen, bekannt. Beispielsweise kann der Leistungsfluss bzw. zumindest die Flussrichtung der Leistung an den Abgängen überwacht werden, und/oder es wird die Summe der Ströme aller Abgänge errechnet. Wird bei einem Eingang ein übermässig hoher Leistungsfluss festgestellt, und/oder ist die Summe der Ströme ungleich Null, so liegt ein Fehlzustand vor. Wo der entsprechende Fehlzustand liegt, ergibt sich in der Regel erst durch Vergleich der Zustandswerte mehrerer Abgänge, oder nachdem einer der Schutzschalter 5 versuchsweise unterbrochen wurde.

In der Regel wird die Zentralsteuerung 4 mehrere Schutzkriterien überprüfen, die bei Nichterfüllung unterschiedliche Massnahmen erfordern.

Je nach Art des nicht erfüllten Schutzkriteriums muss einer (oder mehrere) der Schutzschalter 6 geöffnet werden, wozu die Zentralsteuerung 4 ein Ausschaltsignal für den entsprechenden Schutzschalter 5 erzeugt.

Sind alle Schutzschaltungen 3a - 3g intakt, so genügt es, wenn die Zentralsteuerung das Ausschaltsignal an die lokale Steuerung 10 der entsprechenden Schutzschaltung schickt, welche ihrerseits über die Ansteuerung 7a den Schutzschalter 6 unterbricht. Für den Fall, dass die Steuerung 10 der entsprechenden Schutzschaltung jedoch nicht intakt ist, wird das Ausschaltsignal auch an die Steuerung 10 derjenigen Schutzschaltung geschickt, die ebenfalls in der Lage ist, über ihre zweite Ansteuerung 7b den auszuschaltenden Schutzschalter 5 zu unterbrechen. Dadurch wird sichergestellt, dass selbst bei Ausfall einer Steuerung 10 der entsprechende Schutzschalter 5 ausgeschaltet wird.

Falls beispielsweise die Schutzschaltung 3b ausfällt (z.B. wegen Ausfall des Netzteiles der Steuerung 10 der Schutzschaltung 3b) und detektieren die Schutzschaltungen 3a und 3c - 3f einen Fehler in Rückwärtsrichtung, so kann dieser Fehler entweder auf der Sammelschiene oder auf dem Abgang 2b liegen. Weder die Zentralsteuerung 4 noch die verbleibenden Schutzschaltungen können zwischen diesen beiden Fehlerorten unterschieden.

Deshalb wird nun der Schutzschalter 5 des Abgangs 2b von der Zentralsteuerung 4 über die Steuerung 10 der Schutzschaltung 3c unter Umgehung der Steuerung 10 der Schutzschaltung 3b ausgeschaltet. Dabei verschwindet der Fehlerzustand, falls der Fehler im Abgang 2b liegt. Liegt der Fehler jedoch auf der Sammelschiene 1, so detektieren die Schutzschaltungen 3a und 3c - 3f auch nach Abschaltung des Schutzschalters in Abgang 2b einen Fehler. Somit kann selbst bei Ausfall der Schutzschaltung 3b immer noch zwischen einem Fehler auf Abgang 2b und einem Fehler auf der Sammelschiene unterschieden werden.

Die Steuerung der Schutzschalter 5 von benachbarten Schutzschaltungen kann, wie in Fig. 2 dargestellt, über eine direkte Ansteuerung eines der Erreger des Schutzschalters 5 erfolgen. Es ist jedoch auch denkbar, dass die Steuerung indirekt erfolgt, wie dies in Fig. 3 gezeigt wird. Die hier dargestellte Ausführung unterscheidet sich von jener von Fig. 2 dadurch, dass der Schutzschalter 5 nur den Erreger 6a benötigt, und dass nur eine Ansteuerung 7 vorgesehen ist. Die Ansteuerung 7 kann jedoch von zwei Orten angesteuert werden: Einerseits kann das Ausschaltsignal von der lokalen Steuerung 10 kommen, andererseits von der Steuerung 10 einer benachbarten Schutzschaltung 3c. Auch bei dieser Anordnung kann der Schutzschalter 5 trotz Ausfall seiner Steuerschaltung 10 über eine der übrigen Steuerschaltungen 10 unterbrochen werden.

Das vorliegende System ist fehlertolerant weitgehend ohne Geräteredundanz im Bereich der Schutzschaltungen, da es Dank der Verbindungen 16 zwischen benachbarten Schutzschaltungen bei Defekt einer Steuerung immer noch möglich ist, das Ausschaltsignal an den entsprechenden Schutzschalter zu senden.

### Bezugszeichenliste

1: Sammelschiene
2a - 2f: Abgänge
3a - 3g: Schutzschaltungen
4: Zentralsteuerung
5: Schutzschalter
6a, 6b: Erreger
7, 7a, 7b: Ansteuerungen
8a, 8b: Schalter
9: Spannungsquelle
10: Steuerung
11: Messmittel
12: Bussystem
13: Spannungssensor
14: Hochfrequenz- und/oder Stromsensor
15: Interface
16: Verbindungen

## Patentansprüche

1. Sammelschienenstation mit einer Sammelschiene (1) mit mehreren Abgängen (2a - 2f) für Hochspannungsanschlüsse, wobei die Abgänge (2a - 2f) durch Schutzschaltungen (3a - 3f) geschützt sind und wobei jede Schutzschaltung einen Schutzschalter (5), eine Steuerung (10) zum Steuern des Schutzschalters (5) und Messmittel (11) zum Messen mindestens einer Zustandsgrösse des jeweiligen Abgangs aufweist, wobei Überwachungsmittel (4) vorgesehen sind, die ausgestaltet sind zum Prüfen mindestens eines von den Zustandsgrössen mehrerer Abgänge (2a - 2f) abhängigen Schutzkriteriums und zum Erzeugen eines Ausschaltsignals für mindestens einen der Schutzschalter (5) bei Nichterfüllung des Schutzkriteriums, **dadurch gekennzeichnet, dass** mindestens ein Teil der Steuerungen (10) eine Verbindung (16) zu je mindestens einem Schutzschalter (5) einer anderen Schutzschaltung aufweist, über welche das Ausschaltsignal bei Defekt der Steuerung (10) der anderen Schutzschaltung übertragbar ist.

2. Sammelschienenstation nach Anspruch 1, **dadurch gekennzeichnet, dass** mindestens ein Teil der Schutzschalter (5) mindestens zwei elektromagnetische Erreger (6a, 6b) zum Unterbrechen des Schutzschalters (5) aufweist, wobei einer (6b) der Erreger mit der Steuerung (10) einer anderen Schutzschaltung (3a - 3f) verbunden ist.

3. Sammelschienenstation nach Anspruch 2, **dadurch gekennzeichnet, dass** mindestens einer (6b) der Erreger in einem Stromkreis liegt, der durch einen Schalter (7b) der anderen Schutzschaltung (3a - 3f) schliessbar ist.

4. Sammelschienenstation nach einem der vorangehenden Ansprüche, **dadurch gekennzeichnet, dass** mindestens ein Teil der Schutzschalter (5) eine Ansteuerung (7) aufweist, welche zwei Eingänge besitzt, über welche das Ausschaltsignal zuführbar ist, wobei ein erster der Eingänge mit der Steuerung (10) der gleichen Schutzschaltung und ein zweiter der Eingänge mit der Steuerung (10) einer anderen Schutzschaltung verbunden ist.

5. Sammelschienenstation nach einem der vorangehenden Ansprüche, **dadurch gekennzeichnet, dass** sie eine Zentralsteuerung aufweist, in welcher die Überwachungsmittel (4) angeordnet sind, und welche zum Übertragen des Ausschaltsignals mit den Steuerungen (10) der Schutzschaltungen (3a - 3f) verbunden ist.

6. Verfahren zum Steuern von Schutzschaltern (5) in einer Sammelschienenstation, wobei die Sammelschienenstation eine Sammelschiene (1) mit mehreren Abgängen (2a - 2f) für Hochspannungsanschlüsse aufweist, wobei die Abgänge (2a - 2f) durch Schutzschaltungen (3a - 3f) geschützt sind und wobei jede Schutzschaltung (3a - 3f) einen Schutzschalter (5) und eine Steuerung (10) zum Steuern des Schutzschalters (5) aufweist und in jeder Schutzschaltung (3a - 3f) mindestens eine Zustandsgrösse des jeweiligen Abgangs gemessen wird, wobei mindestens ein von den Zustandsgrössen mehrerer Abgänge (2a - 2f) abhängiges Schutzkriterium geprüft wird und bei Nichterfüllung des Schutzkriteriums mindestens ein Schutzschalter (5) unterbrochen wird, **dadurch gekennzeichnet, dass**, wenn eine der Schutzschaltungen (3a - 3f) gestört ist und der Schutzschalter (5) der gestörten Schutzschaltung auszuschalten ist, ein Ausschaltsignal von einer der übrigen Schutzschaltungen unter Umgehung der Steuerung (10) der gestörten Schutzschaltung an den Schutzschalter (5) der gestörten Schutzschaltung übermittelt wird.

7. Verfahren nach Anspruch 6, **dadurch gekennzeichnet, dass** das Schutzkriterium in einer der Sammelschienenstation zugeordneten Zentralsteuerung (4) ermittelt wird, wobei der Zentralsteuerung die Zustandsgrössen der Abgänge (2a - 2f) zugeführt werden, und dass, wenn eine der Schutzschaltungen (3a - 3f) gestört ist und der Schutzschalter (5) der gestörten Schutzschaltung auszuschalten ist, das Ausschaltsignal von der Zentralsteuerung (4) an die eine der übrigen Schutzschaltungen und von dort an den Schutzschalter (5) der gestörten Schutzschaltung übermittelt wird.

8. Verfahren nach einem der Ansprüche 6 oder 7, **dadurch gekennzeichnet, dass** das Schutzkriterium abhängig ist von Leistungsflüssen und/oder Impedanzen und/oder Strömen und/oder Spannungen und/oder Hochfrequenzsignalen an den Abgängen (2a - 2f).
